# EUROPÄISCHE PATENTANMELDUNG

(11) **EP 2 163 827 A1**
(43) Veröffentlichungstag der Anmeldung: **17.03.2010**
(21) Anmeldenummer: 08164164.9
(22) Anmeldetag: 11.09.2008
(51) Int. Cl.: F24D 3/14, F28F 21/06

(54) **Leitungsanordnung für eine Flächentemperiervorrichtung**

(71) Anmelder: Uponor Innovation AB, 513 81 Fristad (SE)
(72) Erfinder: Störmann, Michael, 48629 Metelen (DE); Riesselmann, Franz Josef, 49393 Lohne (DE)
(74) Vertreter: Epping - Hermann - Fischer

(57) **Zusammenfassung**

Die Leitungsanordnung für eine Flächentemperiervorrichtung ist mit mindestens einer Verbindungsleitung (12) zum Verbinden einer Vorlaufleitung (14) mit einer Rücklaufleitung (16) versehen. Die mindestens eine Verbindungsleitung (12) weist winklige sowie von ihrer Haupterstreckungsrichtung abweichende Abschnitte (20) auf. Die mindestens eine Verbindungsleitung (12) innerhalb dieser Abschnitte (20) ist biegbar, z.B. elastisch, insbesondere federelastisch bzw. rückstellfähig ausgebildet.

## Beschreibung

Die Erfindung betrifft eine Leitungsanordnung für eine Flächentemperiervorrichtung, wobei die Leitungsanordnung mindestens eine Verbindungsleitung zum Verbinden einer Vorlaufleitung mit einer Rücklaufleitung aufweist.

Flächentemperiervorrichtungen weisen von einem Temperiermedium (beispielsweise kaltes oder warmes Wasser) durchflossene Rohre auf, die mindestens eine Verbindungsleitung umfassen, welche zur Verbindung einer Vorlaufleitung mit einer Rücklaufleitung vorgesehen ist. Derartige Anordnungen sind entweder mit mehreren im wesentlichen parallel zueinander verlaufenden Leitungen als sogenannte Kapillarrohrmatten oder aber als mehrere sich kreuzende und untereinander verbundene Verbindungsleitungen ausgeführt, die ein sich selbst tragendes Rohrregister bilden (sogenannte Kreuzmäander wie z. B. in DE-C-100 33 792 beschrieben).

Problematisch bei Rohrregistern bzw. konfektionierten Verbindungsleitungen ist die jeweilige Anpassung an die räumlichen Gegebenheiten am Einbauort. In der WO-A-2007/039395 wird dieses Problem dadurch gelöst, dass das Rohrregister vor Ort aus verschiedenen Einzelkomponenten zusammengesetzt wird. Der Kreuzmäander nach DE-C-100 33 792 sieht eine derartige Variabilität an die Längen- und Breitendimensionen nicht vor.

Aufgabe der Erfindung ist es daher, eine Leitungsanordnung für eine Flächentemperiervorrichtung zu schaffen, die sich auf einfache Art und Weise an die baulichen Platzverhältnisse anpassen lässt.

Zur Lösung dieser Aufgabe wird mit der Erfindung in ihrer allgemeinsten Form eine Leitungsanordnung für eine Flächentemperiervorrichtung vorgeschlagen, die mit mindestens einer Verbindungsleitung zum Verbinden einer Vorlaufleitung mit einer Rücklaufleitung versehen ist, wobei die mindestens eine Verbindungsleitung winklige sowie von ihrer Haupterstreckungsrichtung abweichende Abschnitte aufweist und wobei die mindestens eine Verbindungsleitung innerhalb dieser Abschnitte elastisch, insbesondere federelastisch bzw. rückstellfähig ausgebildet ist.

Darüber hinaus wird mit der Erfindung eine Leitungsanordnung für eine Flächentemperiervorrichtung vorgeschlagen, die versehen ist mit
- einer Vorlaufleitung,
- einer Rücklaufleitung,
- wobei die Vorlaufleitung in einer Abstandsrichtung von der Rücklaufleitung beabstandet ist, und
- mehreren Verbindungsleitungen zum Verbinden der Vorlaufleitung mit der Rücklaufleitung.

Diese Leitungsanordnung ist erfindungsgemäß **dadurch gekennzeichnet, dass** die Verbindungsleitungen Abschnitte aufweisen, innerhalb derer sie winklig zur und abweichend von der Abstandsrichtung verlaufen und biegbar, z.B. elastisch und insbesondere federelastisch bzw, rückstellfähig ausgebildet sind, und dass jeweils benachbarte Verbindungsleitungen entlang einer winklig z. B. quer oder schräg zur Abstandsrichtung verlaufenden Verbindungslinie untereinander verbunden sind.

Grundgedanke der erfindungsgemäßen Leitungsanordnung ist also eine längenveränderbare Verbindungsleitung, die zu diesem Zweck streckbar ist, indem sie von ihrer Haupterstreckungsrichtung abweichende Abschnitte aufweist, innerhalb derer sie elastisch, insbesondere federelastisch bzw. rückstellfähig ausgebildet ist. Die Verbindungsleitung lässt sich also nach dem Prinzip eines Faltenbalges längen, womit sie bzw. das Rohrregister, das neben der Verbindungsleitung auch eine Vorlauf- sowie eine Rücklaufleitung aufweist, längenanpassbar ist. Zweckmäßigerweise verlaufen mehrere derartige Verbindungsleitungen nebeneinander bzw. quer zueinander, wobei im letztgenannten Fall die Verbindungsleitungen untereinander direkt verbunden sind, und zwar vorzugsweise als eine einzige einstückige Rohrleitung. Mit einer derartigen Rohrleitung, die einzelne jeweils benachbarte, untereinander verbundene Verbindungsleitungen aufweist, wobei eine erste Gruppe von Verbindungsleitungen sich in einer ersten Richtung erstrecken und eine zweite Gruppe derartiger Verbindungsleitungen sich in einer zweiten, winklig zur ersten Erstreckungsrichtung erstreckenden Richtung verlaufen, lässt sich ein in zwei Dimensionen dehnbares Rohrregister aus sich kreuzenden Rohrabschnitten (auch Kreuzmäander genannt) herstellen. Hierbei weist die Leitungsanordnung, wie zuvor erwähnt, mehrere Verbindungsleitungen auf, die untereinander insbesondere einstückig verbunden sind und sich in zwei winklig zueinander verlaufenden Richtungen erstrecken sowie eine Vielzahl von an Kreuzungspunkten überkreuzende Verbindungsleitungsabschnitte bilden, die an zumindest einigen der Kreuzungspunkten aneinander fixiert sind, wobei die Verbindungsleitungsabschnitte zwischen in ihren Erstreckungen aufeinander folgenden Kreuzungspunkten zu den jeweiligen Kreuzungspunkt-Abstandsrichtungen winklig verlaufende Teilabschnitte aufweisen, innerhalb derer die Verbindungsleitungsabschnitte elastisch, insbesondere federelastisch, sind.

Ganz allgemein können die von der Haupterstreckungsrichtung der Verbindungsleitungen abweichenden Abschnitte als Ausbuchtungen bezeichnet werden, die insbesondere einen wellenförmigen, dreieckförmigen, zick-zack-förmigen, mäanderförmigen oder sägezahnförmigen Verlauf aufweisen.

Sämtliche Formen, die eine Längung der Verbindungsleitungen im oben genannten Sinne erlauben, sind als Verlaufsform der von der Haupterstreckungsrichtung abweichenden Abschnitte der Verbindungsleitungen möglich.

In weiterer vorteilhafter Ausgestaltung der Erfindung ist vorgesehen, dass die Verbindungsleitungen aus Kunststoff und/oder einem Kunststoff-Metall-Verbundwerkstoff bestehen. Im letztgenannten Fall weisen die Verbindungsleitungen Kunststoff-Basisrohre auf, die von einer dünnen Metallschicht (beispielsweise Aluminium bzw. Aluminiumlegierung) umgeben sind, wobei die Metallschicht außen wiederum von einer Kunststoffschicht umgeben sein kann.

Bei Verwendung der erfindungsgemäß dehnbaren Verbindungsleitungen in einem Rohrregister mit insbesondere im wesentlichen parallel zueinander verlaufenden Vorlauf- und Rücklaufleitungen (Sammelrohre) wird eine Leitungsanordnung geschaffen, deren sich zwischen den Vorlauf- und Rücklaufleitungen erstreckende Verbindungsleitungen durch Auseinanderbewegen der Vorlauf- und Rücklaufleitungen, also bei Vergrößerung des Abstandes dieser beiden Leitungen, dehnbar sind. Hierbei sind die Verbindungsleitungen entlang einer winklig, insbesondere quer oder schräg zur Abstandsrichtung (Erstreckung zwischen Vorlauf- und Rücklaufleitung) verlaufenden Verbindungslinie untereinander verbunden. Diese Verbindung erfolgt beispielsweise durch separate, sich längs der Verbindungslinien erstreckende Verbindungselemente oder aber direkt durch eine Verbindung benachbarter Verbindungsleitungen, die sich zu diesem Zweck punktuell bzw. bereichsweise berühren und an den Berührungsstellen miteinander durch beispielsweise Verkleben oder Verschweißen verbunden sind. Die Ausbuchtungen der Verbindungsleitungen können dabei parallel oder antiparallel zueinander verlaufen.

Die Erfindung wird nachfolgend anhand diverser Ausführungsbeispiele und unter Bezugnahme auf die Zeichnung näher erläutert. Im Einzelnen zeigen dabei:
- Fig. 1: ein erstes Ausführungsbeispiel einer Kapillarrohrmatte in Form einer längendehnbaren Leitungsanordnung im nicht gedehnten Zustand,
- Fig. 2: die Kapillarrohrmatte gemäß Fig. 1 im gedehnten Zustand,
- Fig. 3: ein weiteres Ausführungsbeispiel einer als Kapillarrohrmatte ausgeführten, längendehnbaren Leitungsanordnung, bei der benachbarte Verbindungsleitungen durch separate Verbindungselemente untereinander verbunden sind,
- Fig. 4: ein Ausführungsbeispiel einer ebenfalls als Kapillarrohrmatte ausgebildeten Leitungsanordnung, die auf einem dehnbaren Gewebe fixiert ist, und
- Fig. 5: eine Leitungsanordnung mit sich gruppenweise kreuzenden Verbindungsleitungen, die pro Gruppe untereinander verbunden sind und zwischen Kreuzungspunkten der beiden Gruppen von Verbindungsleitungen Ausbuchtungen aufweisen.

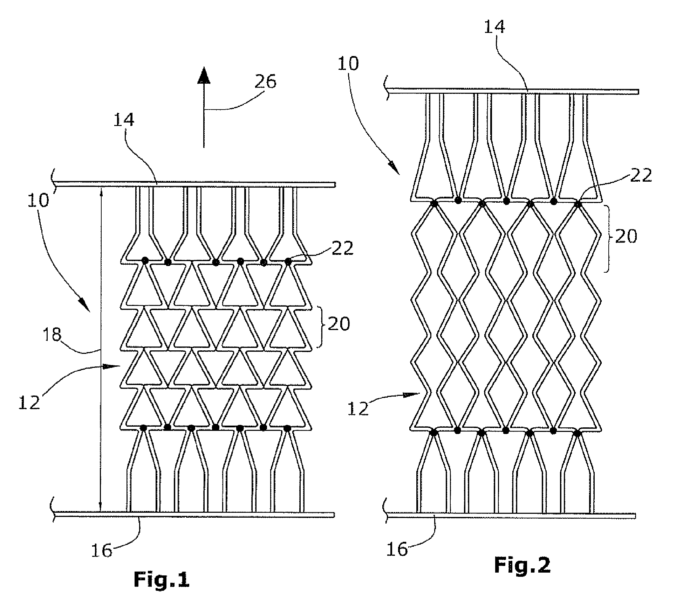

In den Fign. 1 und 2 ist das grundsätzliche Konzept der erfindungsgemäßen Leitungsanordnung wiedergegeben. Fig. 1 zeigt eine Leitungsanordnung 10, die als sogenannte Kapillarrohrmatte ausgeführt ist. Hiermit sind vergleichsweise dünne Verbindungsleitungen 12 gemeint, die von einer Vorlauf-(Sammel-)Leitung 14 abzweigen und in einer Rücklauf-(Sammel-)Leitung 16 enden. Die Verbindungsleitungen 12 sowie die Vorlauf- und die Rücklaufleitung 14,16 bestehen in diesem Ausführungsbeispiel aus Kunststoff.

Wie zu erkennen ist, sind die Vorlaufleitung 14 und die Rücklaufleitung 16 längs einer mit 18 bezeichneten Abstandsrichtung voneinander beabstandet. Diese Abstandsrichtung 18 ist auch gleich der Haupterstreckungsrichtung der nebeneinander angeordneten Verbindungsleitungen 12, von denen im Ausführungsbeispiel gemäß Fig. 1 acht vorhanden sind. Jede Verbindungsleitung 12 weist Abschnitte 20 auf, innerhalb derer die betreffende Verbindungsleitung 12 einen von ihrer Haupterstreckungsrichtung (Abstandsrichtung 18) abweichenden Verlauf, d.h. z.B. Ausbuchtungen, aufweist.

Im Ausführungsbeispiel gemäß Fig. 1 sind die Ausbuchtungen der Abschnitte 20 benachbarter Verbindungsleitungen 12 antiparallel. Jede Ausbuchtung ist sägezahnförmig ausgebildet, so dass sich durch zwei benachbarte, derartige Ausbuchtungen aufweisende Verbindungsleitungen 12 eine "tannenbaumähnliche" Struktur ergibt. Benachbarte Verbindungsleitungen 12 berühren sich an den Punkten 22, wo sie miteinander verklebt oder verschweißt sind, wodurch die Verbindungsleitungen 12 entlang von quer zur Abstandsrichtung 18 verlaufenden Verbindungslinien 24 untereinander verbunden sind.

Wird nun die Leitungsanordnung 10 in Richtung des Pfeils 26 (parallel zur Abstandsrichtung 18) gestreckt, so können sich die Verbindungsleitungen 12 längen, was in Fig. 2 gezeigt ist. Innerhalb der Ausbuchtungen sind die Verbindungsleitungen flexibel, was insbesondere elastisch erfolgt, wenn die Verbindungsleitungen 12 aus z.B. Kunststoff bestehen.

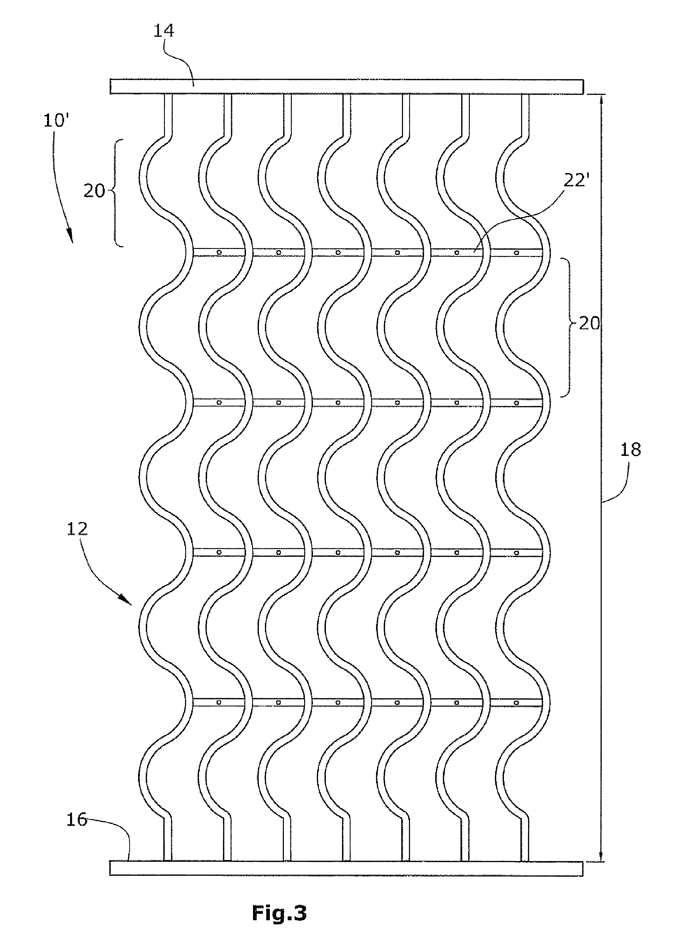

Fig. 3 zeigt ein zweites Ausführungsbeispiel einer Leitungsanordnung 10'. In Fig. 3 sind die Vorlaufleitung, die Rücklaufleitung und die Verbindungsleitungen mit den gleichen Bezugszeichen versehen wie in den Fign. 1 und 2.

In diesem Ausführungsbeispiel verlaufen die Verbindungsleitungen 12 wellenförmig und sind über Verbindungselemente 22' miteinander verbunden. Diese Verbindungselemente 22' erstrecken sich im wesentlichen quer zur Abstandsrichtung 18 zwischen Vorlauf- und Rücklaufleitung 14,16. Die Verbindungselemente 22' erstrecken sich entlang im wesentlichen quer zur Abstandsrichtung 18 verlaufender Verbindungslinien 24. Die Ausbuchtungen 21 nebeneinanderliegender Verbindungsleitungen 12 sind parallel zueinander.

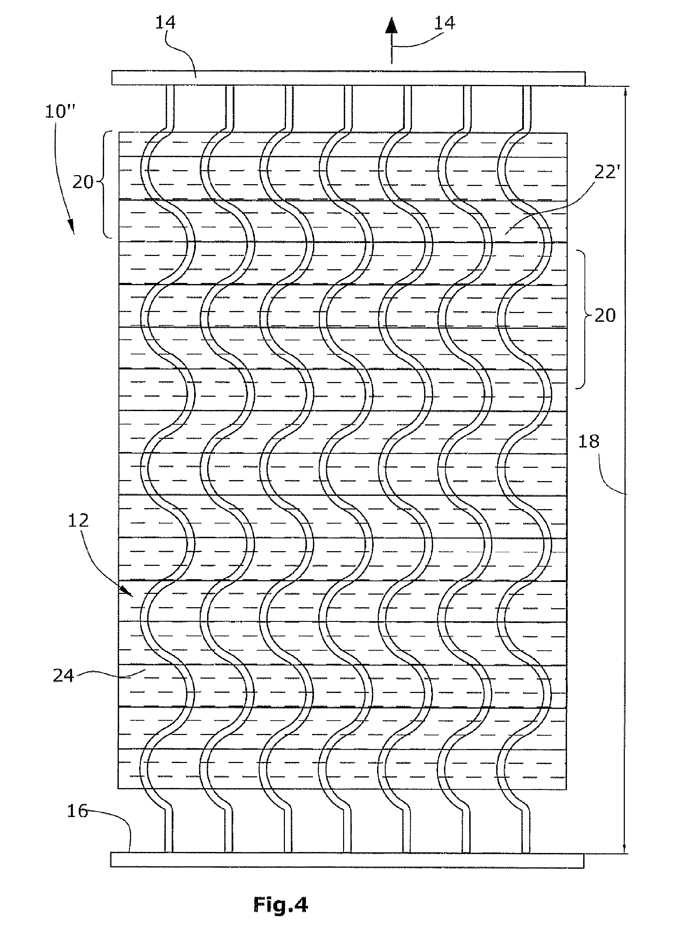

Fig. 4 zeigt ein weiteres Beispiel für eine Leitungsanordnung 10", ausgebildet als Rohrregister in Form einer Kapillarrohrmatte, wie es auch in den Ausführungsbeispielen der Fign. 1 bis 3 der Fall ist. Insoweit sind für gleiche Teile wie Vorlaufleitung, Rücklaufleitung, Verbindungsleitungen und deren Ausbuchtungen in Fig. 4 die gleichen Bezugszeichen verwendet wie in den vorherigen Figuren. Die Verbindungsleitungen 12 der Leitungsanordnung 10" sind gemäß Fig. 4 auf einem in Richtung des Pfeils 26 (Abstandsrichtung 18) dehnbaren textilen Bahnmaterial 22" fixiert (siehe die bei 24 angedeuteten Verbindungslinien).

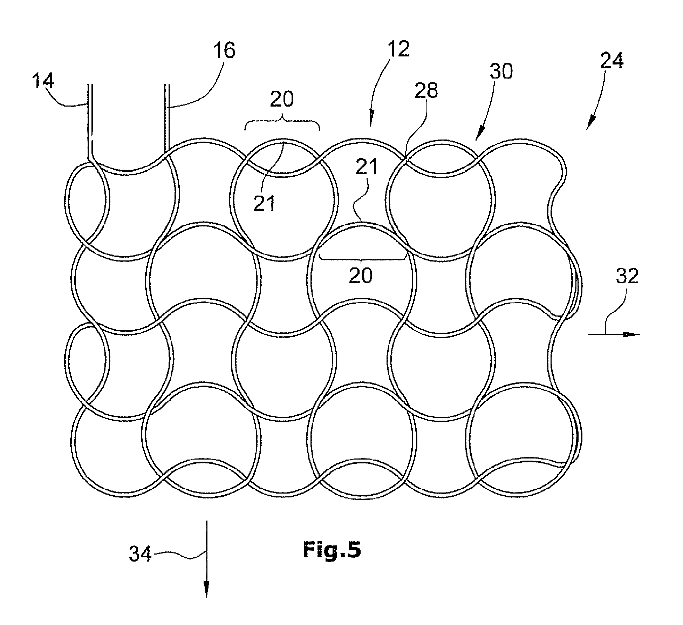

Schließlich zeigt Fig. 5 eine Leitungsanordnung 10''' als selbsttragendes Rohrregister mit einer Vielzahl von sich kreuzenden Verbindungsleitungen 12, die untereinander zu einer gemeinsamen Leitung einstückig miteinander verbunden sind, also eine einzige Leitung aufweist, aus als Leitungsabschnitte 20 geformt sind und die eine Vorlaufleitung 14 mit einer Rücklaufleitung 16 verbinden. Die Leitungsanordnung 10''' umfasst zwei Gruppen von sich kreuzenden Verbindungsleitungen 12, wobei die sich kreuzenden Verbindungsleitungen 12 an ihren Kreuzungspunkten 28 bzw. an einigen der Kreuzungspunkte 28 miteinander durch Verbindungselemente wie beispielsweise Klammern, Schellen, Kabelbinder oder dergleichen verbunden bzw. festgelegt sind. Innerhalb der Leitungsabschnitte 30 zwischen benachbarten Kreuzungspunkten 28 weisen die Verbindungsleitungen 12 Teilabschnitte 20 auf, die von der Erstreckung zwischen benachbarten Kreuzungspunkten abweichen (beispielsweise Ausbuchtungen). Diese Teilabschnitte können so, wie die Ausbuchtungen 21 der Leitungsanordnungen gemäß den vorherigen Ausführungsbeispielen ausgebildet sein. Auf diese Weise entsteht ein selbsttragendes Rohrregister, das in den beiden Haupterstreckungsrichtungen der beiden Gruppen von Verbindungsleitungen 12, also in Richtung der Pfeile 32 und 34 gedehnt werden kann und damit an die Einbauverhältnisse vor Ort angepasst werden kann.

## Patentansprüche

1. Leitungsanordnung für eine Flächentemperiervorrichtung mit
- einer Vorlaufleitung (14),
- einer Rücklaufleitung (16),
- wobei die Vorlaufleitung (14) in einer Abstandsrichtung (18) von der Rücklaufleitung (16) beabstandet ist, und
- mehreren Verbindungsleitungen (12) zum Verbinden der Vorlaufleitung (14) mit der Rücklaufleitung (16),
**dadurch gekennzeichnet,**
- **dass** die Verbindungsleitungen (12) Abschnitte (20) aufweisen, innerhalb derer sie winklig zu und abweichend von der Abstandsrichtung (18) verlaufen und biegbar, z.B. elastisch, insbesondere federelastisch bzw. rückstellfähig ausgebildet sind, und
- **dass** jeweils benachbarte Verbindungsleitungen (12) entlang einer winklig z. B. quer oder schräg zur Abstandsrichtung (18) verlaufenden Verbindungslinie (24) untereinander verbunden sind.

2. Leitungsanordnung nach Anspruch 1, **dadurch gekennzeichnet, dass** die Verbindungsleitungen (12) von der Abstandsrichtung (18) abweichende Ausbuchtungen (21), insbesondere einen wellenförmigen, dreieckförmigen, zick-zack-förmigen oder sägezahnförmigen Verlauf aufweisen.

3. Leitungsanordnung nach Anspruch 2, **dadurch gekennzeichnet, dass** die Ausbuchtungen (21) der Verbindungsleitungen (12) parallel zueinander verlaufen.

4. Leitungsanordnung nach Anspruch 2, **dadurch gekennzeichnet, dass** die Ausbuchtungen (21) der Verbindungsleitungen (12) antiparallel zueinander verlaufen.

5. Leitungsanordnung nach einem der Ansprüche 1 bis 4, **dadurch gekennzeichnet, dass** die Verbindungsleitungen (12) an sich längs der Verbindungslinien erstreckenden Verbindungselementen (22') befestigt sind.

6. Leitungsanordnung nach einem der Ansprüche 1 bis 4, **dadurch gekennzeichnet, dass** jeweils benachbarte Verbindungsleitungen (12) sich längs der Verbindungslinien (24) berühren und insbesondere durch Kleben, Schweißen, Klammern oder dergleichen miteinander verbunden sind.

7. Leitungsanordnung nach einem der Ansprüche 1 bis 6, **dadurch gekennzeichnet, dass** die Verbindungsleitungen (12) auf einem zumindest in Abstandsrichtung dehnbaren Bahnmaterial (22") fixiert sind.

8. Leitungsanordnung nach Anspruch 1, **dadurch gekennzeichnet, dass** die Verbindungsleitungen (12) untereinander verbunden sind und sich in zwei winklig zueinander verlaufenden Richtungen (32,34) erstrecken sowie eine Vielzahl von an Kreuzungspunkten (28) überkreuzende Verbindungsleitungsabschnitte bilden, die an zumindest einigen der Kreuzungspunkten (28) aneinander fixiert sind, und dass die Verbindungsleitungsabschnitte zwischen in ihren Erstreckungen aufeinander folgenden Kreuzungspunkten (28) zu den jeweiligen Kreuzungspunkt-Abstandsrichtungen winklig verlaufende Teilabschnitte (20) aufweisen, innerhalb derer die Verbindungsleitungsabschnitte (12) elastisch, insbesondere federelastisch, sind.

9. Leitungsanordnung für eine Flächentemperiervorrichtung mit mindestens einer Verbindungsleitung (12) zum Verbinden einer Vorlaufleitung (14) mit einer Rücklaufleitung (16), **dadurch gekennzeichnet, dass** die mindestens eine Verbindungsleitung (12) winklige sowie von ihrer Haupterstreckungsrichtung abweichende Abschnitte (20) aufweist und dass die mindestens eine Verbindungsleitung (12) innerhalb dieser Abschnitte (20) biegbar, z.B. elastisch, und insbesondere federelastisch bzw. rückstellfähig ausgebildet ist.

10. Leitungsanordnung nach Anspruch 9 mit mehreren Verbindungsleitungen (12), die untereinander insbesondere einstückig verbunden sind und sich in zwei winklig zueinander verlaufenden Richtungen (32,34) erstrecken sowie eine Vielzahl von an Kreuzungspunkten (28) überkreuzende Verbindungsleitungsabschnitte bilden, die an zumindest einigen der Kreuzungspunkten (28) aneinander fixiert sind, wobei die Verbindungsleitungsabschnitte zwischen in ihren Erstreckungen aufeinander folgenden Kreuzungspunkten (28) zu den jeweiligen Kreuzungspunkt-Abstandsrichtungen winklig verlaufende Teilabschnitte (20) aufweisen, innerhalb derer die Verbindungsleitungsabschnitte (12) elastisch, insbesondere federelastisch, sind.

11. Leitungsanordnung nach Anspruch 10, **dadurch gekennzeichnet, dass** die Verbindungsleitungen (12) innerhalb ihrer Teilabschnitte (20) zwischen benachbarten Kreuzungspunkten (28) Ausbuchtungen (21), insbesondere einen wellenförmigen, dreieckförmigen, zick-zack-förmigen oder sägezahnförmigen Verlauf aufweisen.

12. Leitungsanordnung nach Anspruch 11, **dadurch gekennzeichnet, dass** die Ausbuchtungen (21) benachbarter, in einer gemeinsamen Erstreckungsrichtung verlaufender Verbindungsleitungen (12) parallel oder antiparallel verlaufen.
